# EUROPEAN PATENT SPECIFICATION

(11) **EP 1 398 345 B1**
(45) Date of publication and mention of the grant of the patent: **13.06.2007**
(21) Application number: 02425555.6
(22) Date of filing: 10.09.2002
(51) Int. Cl.: C08J 9/00, A01G 13/02

(54) **Method of preventing the exudation of additives in thermic film for agricultural use**
Verfahren zur Vermeidung des Ausblutens von Additiven in thermischen Filmen für die landwirtschaftliche Verwendung
Procédé pour empêcher l'exsudation d'additifs hors des films thermiques à usage agricole

(43) Date of publication of application: 17.03.2004
(73) Proprietor: Pati SpA, 31020 San Zenone Degli Ezzelini (TV) (IT)
(72) Inventor: Stefani, Livio, 36060 Romano D'Ezzelino(VI) (IT)
(74) Representative: Cantaluppi, Stefano

(56) References cited:
- DE-C- 10 001 210
- US-A- 4 192 025
- US-B2- 6 423 758
- DATABASE WPI Section Ch, Week 197623 Derwent Publications Ltd., London, GB; Class A17, AN 1976-42876X XP002231871 & JP 51 047056 A (SHOWA PETROCHEM KK), 22 April 1976 (1976-04-22)

## Description

The present invention relates to a method for preventing the exudation of additives in thermic films for agricultural use, according to the precharacterizing clause of the main claim.

Thermic films are polymer films (generally based on polyolefins) having mechanical and optical properties conforming to the requirements of European Standard EN 13206.

Films of this type, particularly when they are used for covering greenhouses where long periods of exposure to sunlight are expected, typically contain additives consisting of what are known as anti-UV substances. These substances can absorb ultraviolet (UV) radiation, and are used to protect the films from degradation of the polymer matrix initiated by ultraviolet radiation.

A known group of anti-UV substances consists of the benzophenones, which have a good stabilizing action, can be processed together with the polymer material forming the film, and are commercially available at relatively low cost.

However, benzophenones have a significant limitation in that they tend to diffuse through the polymer matrix, reaching the free surface of the film in a relatively short time (a phenomenon known as exudation), where they are subject to leaching, as a result of rainfall for example, or evaporation because of their relatively high vapour pressure.

This phenomenon causes a deterioration of the UV radiation resistance characteristics of thermic films, thus considerably limiting the useful life of the films. In the specific field to which the present invention relates, it is estimated that the exudation of benzophenones is completed after a period of a few months, usually in less than a year, whereas the specified useful life required by the market can be as much as four years.

The problem is such that it is frequently found to be completely impractical to use benzophenones as anti-UV additives in thermic films for agricultural use, where the films are exposed to sunlight on a daily basis.

One solution to this problem proposed in the prior art is to replace benzophenones with other anti-UV substances, such as triazines and benzotriazoles, which are characterized in that they have low diffusion velocities in the polymer matrix, and lower volatility, since their molecules are more complex, heavier and sterically larger than those of benzophenones. However, these substances are subject to the limitations of a higher cost of procurement.

The problem which the present invention is intended to resolve is that of providing a method for preventing the exudation of additives in thermic films for agricultural use, in such a way as to overcome the aforesaid limits of the cited prior art.

This problem is resolved by the invention with a method used in accordance with the following claims.

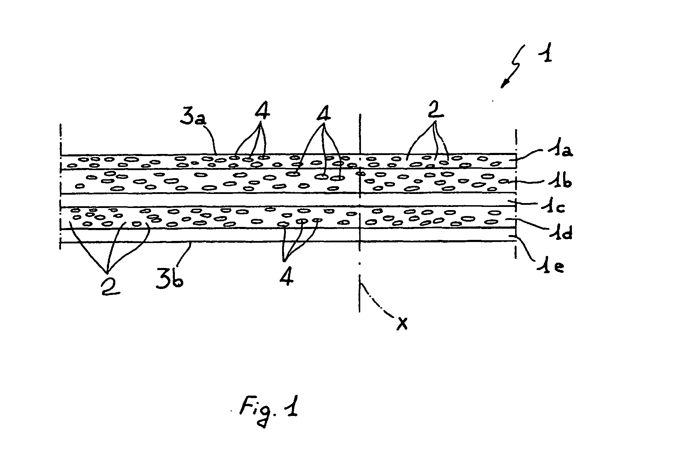

The characteristics and advantages of the invention will be made clearer by the detailed description of a preferred embodiment thereof, illustrated for the purpose of guidance and without restrictive intent with reference to the attached drawing, in which Figure 1 is a schematic sectional view of a polymer film manufactured according to the present invention.

In the attached figure, the number 1 indicates the whole of a thermic film for agricultural use made according to the present invention.

The film 1, preferably of the multilayer type having five polymer layers 1a - 1e, is designed for covering greenhouses, and comprises a polymer matrix 2 made of polyethylene to which an effective quantity of benzophenones, acting as the anti-UV substance, has been added in the course of manufacture, together with certain conventional additives such as antioxidants, slip agents, surface tension modifiers, pigments and stabilizers.

It should be understood that the film 1 can be made equally well with a different number of layers, or from other polymers known in this field, such as polyvinyl chloride (PVC), polypropylene (PP), polyamide (PA), and fluoropolymers or copolymers such as ethylene vinyl acetate (EVA), ethylene butyl acrylate (EBA), and ethylene methyl acrylate (EMA).

The opposing external surfaces 3a, 3b of the polymer matrix 2 are identified in the film 1. According to a principal characteristic of the present invention, a plurality of gas bubbles, all indicated by 4, is also dispersed in the matrix 2, these bubbles all being ellipsoidal in shape and generally elongated parallel to a direction of stretching of the film 1.

Thus the total interface surface between the gaseous phase and the solid phase of the film 1, formed by the polymer matrix 2, is determined not only by the external surfaces 3a, 3b but also by the sum of the internal surfaces of the bubbles 4.

Preferably, the quantity of bubbles 4 present in the film is variable from 500 to 5000 per cubic millimetre (bubble density) and the mean dimension of the bubbles (measured along the transverse direction X of the film) is in the range from 10 to 50 microns, and is preferably approximately 30 microns.

With the densities and dimensions indicated above, the external surface of the film 1 expressed as a fraction of the total interface surface is in the range from 0.5 to 0.05 of the total interface surface. Clearly, the external surface fraction can be varied widely by modifying the aforesaid parameters, to obtain values that may even be lower than 0.01. Additionally, in the case of multilayer film, the bubbles 4 are made to be dispersed only in certain layers (layers 1a, 1b and 1d in Figure 1).

The exemplary embodiment described here relates in particular to benzophenones, but the inventive concept underlying it is similarly applicable to any other substance having a relatively high diffusion velocity in the polymer. The generic term "migrating substance" is used in the following text to denote this substance.

The migrating substances present in the solid phase of the film 1 tend to move spontaneously through the polymer over time until they reach an interface surface and emerge from the polymer. If this surface is an internal surface, formed between the solid phase of the film 1 and one of the bubbles 4, the migrating substances remain incorporated in the bubble, mainly on the interface surface, and there is no risk of leaching by external atmospheric agents or evaporation. The migrating substance is thus essentially "locked" inside the film 1, which prevents its exudation and consequent loss.

It should be noted that, in the specific case of benzophenones, the functional effectiveness of the migrating substance is not in any way compromised by the fact that it is inside a bubble 4 rather than inside the polymer matrix.

The number of bubbles 4 per unit volume and their dimensions are such that the fraction of external surface is as small as possible with respect to the total interface surface, provided that the mechanical characteristics of the polymer film 1 are not compromised.

Tests conducted by the applicant have demonstrated that films exposed to sunlight for a period of 22 months show a concentration of benzophenone equal to approximately 50% of the initial quantity introduced into the polymer mix. The benefits of this are emphasized by a number of comparisons with thermic films having the same composition as the film 1, but without the bubbles 4, in which the percentage of benzophenone decreased by half after a period of approximately 3 - 6 months.

A further advantage of the present invention is the significant increase in the useful life of films made according to the method of the invention.

It has been found that the useful life, defined according to current standards as the period of time after which the percentage elongation at break of the film falls to half of the original value, is 25 - 50% longer than that of a conventional thermic film including benzophenones but no bubbles.

This considerable advantage is directly due to the longer period in which the benzophenones remain within the film, and the consequent delay in the degradation of the film.

The film 1 is produced by the conventional extrusion processes used for making thermic films, for example by blowing or flat die extrusion.

Thus the present invention resolves the problem identified above with reference to the cited prior art, while also offering numerous other advantages, including a consistent increase in the useful life of the film.

## Claims

1. Method for preventing the exudation of additives in a thermic film for agricultural use, **characterized in that** a plurality of gas bubbles (4) is dispersed in a polymer matrix (2) of the said film, in order to increase the interface surface between the said polymer matrix and a phase extraneous to the said polymer matrix.

2. Method according to Claim 1, in which the interface surface (3a, 3b) of the said polymer matrix in contact with the external environment of the said film, expressed as a fraction of the total interface surface (3a, 3b, 4) of the said matrix, is less than 0.5.

3. Method according to Claim 2, in which the interface surface (3a, 3b) of the said polymer matrix in contact with the external environment of the said film, expressed as a fraction of the total interface surface (3a, 3b, 4) of the said matrix, is in the range from 0.5 to 0.05.

4. Method according to one or more of the preceding claims, in which the said bubbles (4) have a mean dimension, measured along a transverse direction (X) of the said film (1), which is in the range from 10 microns to 50 microns, and which is preferably 30 microns.

5. Method according to one or more of the preceding claims, in which the number of the said bubbles (4) per cubic millimetre is in the range from 500 to 5000.

6. Method according to one or more of the preceding claims, in which the said additives comprise benzophenones.

## Patentansprüche

1. Verfahren zur Vermeidung der Ausscheidung von Additiven in einer thermischen Folie für landwirtschaftliche Verwendung, **dadurch gekennzeichnet, dass** eine Vielzahl von Gasblasen (4) in einer Polymermatrix (2) der Folie verteilt ist, um die Schnittstellenoberfläche zwischen der Polymermatrix und einer Phase außerhalb der Polymermatrix zu vergrößern.

2. Verfahren nach Anspruch 1, bei dem die Schnittstellenoberfläche (3a, 3b) der Polymermatrix, die mit der Außenumgebung der Folie in Kontakt ist, ausgedrückt als ein Bruchteil der gesamten Schnittstellenoberfläche (3a, 3b, 4) der Matrix, geringer als 0,5 ist.

3. Verfahren nach Anspruch 2, bei dem die Schnittstellenoberfläche (3a, 3b) der Polymermatrix, die mit der Außenumgebung der Folie in Kontakt ist, ausgedrückt als ein Bruchteil der gesamten Schnittstellenoberfläche (3a, 3b, 4) der Matrix, im Bereich von 0,5 bis 0,05 liegt.

4. Verfahren nach einem oder mehreren der vorhergehenden Ansprüche, bei dem die Blasen (4) eine durchschnittliche Abmessung, gemessen entlang einer Querrichtung (X) der Folie (1), aufweisen, die in dem Bereich von 10 Mikron bis 50 Mikron liegt, und welche vorzugsweise 30 Mikron ist.

5. Verfahren nach einem oder mehreren der vorhergehenden Ansprüche, bei dem die Anzahl der Blasen (4) pro Kubikmillimeter in dem Bereich von 500 bis 5000 liegt.

6. Verfahren nach einem oder mehreren der vorhergehenden Ansprüche, bei dem die Additive Benzophenone umfassen.

## Revendications

1. Procédé pour empêcher l'exsudation d'additifs hors d'un film thermique à usage agricole, **caractérisé en ce qu'**une pluralité de bulles gazeuses (4) est dispersée dans une matrice polymère (2) dudit film, de manière à augmenter la surface d'interface entre ladite matrice de polymère et une phase étrangère à ladite matrice de polymère.

2. Procédé selon la revendication 1, dans lequel la surface d'interface (3a, 3b) de ladite matrice de polymère en contact avec l'environnement externe dudit film, exprimée comme une fraction de la surface d'interface totale (3a, 3b, 4) de ladite matrice, est inférieure à 0,5.

3. Procédé selon la revendication 2, dans lequel la surface d'interface (3a, 3b) de ladite matrice de polymère en contact avec l'environnement externe dudit film, exprimée comme une fraction de la surface d'interface totale (3a, 3b, 4) de ladite matrice, est dans la plage de 0,5 à 0,05.

4. Procédé selon l'une ou plusieurs des revendications précédentes, dans lequel lesdites bulles (4) ont une dimension moyenne, mesurée selon une direction transversale (X) dudit film (1), qui est dans la plage de 10 micromètres à 50 micromètres, et qui est de préférence 30 micromètres.

5. Procédé selon l'une ou plusieurs des revendications précédentes, dans lequel le nombre desdites bulles (4) par millimètre cube est dans la plage de 500 à 5000.

6. Procédé selon l'une ou plusieurs des revendications précédentes, dans lequel lesdits additifs comprennent des benzophénones.
